# DEMANDE DE BREVET EUROPEEN

(11) **EP 1 408 271 A1**
(43) Date de publication de la demande: **14.04.2004**
(21) Numéro de dépôt: 03352017.2
(22) Date de dépôt: 10.10.2003
(51) Int. Cl.: F16M 11/12

(54) **Tête camera trois axes suspendue**

(30) Priorité: 11.10.2002 FR 0212634
(71) Demandeur: SARL Sandor Weltmann, 31000 Toulouse (FR)
(72) Inventeur: Bügel, Alexandre, 31000 Toulouse (FR)

(57) **Abrégé**

Montage articulé suspendu pour supporter un appareil (C), pour une prise de vue par exemple, permettant de basculer et pivoter cet objet facilement autour des axes X, Y et Z, grâce à une superposition du centre de gravité (G) de l'ensemble mobile avec le croisement en un point des trois axes de mouvement.

## Description

La présente invention concerne les montages inclinables ou basculants et pivotants et plus particulièrement, quoique non exclusivement, les montages inclinables ou basculants et pivotants pour supporter des articles tels que des appareils de prises de vue photographique, de cinéma ou de télévision, ou d'autres appareils qui nécessitent d'être basculés et pivotés facilement et doucement.

L'invention présentée permet des mouvements pivotants autour de trois axes X, Y et Z, perpendiculaires l'un par rapport à l'autre et qui se croisent en un point, qui peut par réglage être confondu avec le centre de gravité de l'appareil qu'il s'agit d'incliner ou de pivoter. L'invention sera décrite ci-après en référence à une caméra, mais on comprendra que l'on peut monter d'autres articles sur ce support.

Lors de l'utilisation de caméras, il arrive que l'on cherche une fixation souple, rapide et légère, différente d'un trépied classique avec une tête caméra. Entre autre pour les prises de vue dans des véhicules, sur des bateaux et en avion, l'appui sur le plancher est déconseillé, car celui-ci transmet les vibrations et chocs à la caméra. On essaye parfois de suspendre une caméra à sa poignée, de préférence avec un élément élastique ou amortissant ; l'inconvénient étant que le seul déplacement facile de la caméra est la rotation autour d'un axe vertical Y, le centre de gravité étant trop en dessous de l'axe de pivot pour permettre un basculement vers l'avant et l'arrière, appelé tilt, ou vers la droite et la gauche, appelé roll.

La présente invention permet d'accrocher un appareil de prises de vues de manière que tous les mouvements s'effectuent en rotation autour d'un point se rapprochant ou se confondant avec le centre de gravité de cette caméra. De cette manière, les mouvements sont doux et faciles, mais en plus, grâce à l'inertie et l'équilibre de la caméra, le cadre filmé n'est pas perturbé par les secousses du support sur lequel est accroché l'ensemble. L'ensemble étant suspendu, il est préférable d'utiliser une attache d'une certaine souplesse, ou ayant un caractère amortissant. Selon la nécessité, des gyroscopes inertiels peuvent être intégrés dans le montage ou s'ajouter sur ou sous la caméra, ce qui nécessite d'équilibrer l'ensemble en conséquence. L'inertie étant ainsi augmentée, le cadre se trouve stabilisé davantage, et les mouvements sont plus fluides, sans pour autant, comme pour les têtes caméras classiques, nécessiter l'appui sur un support stable.

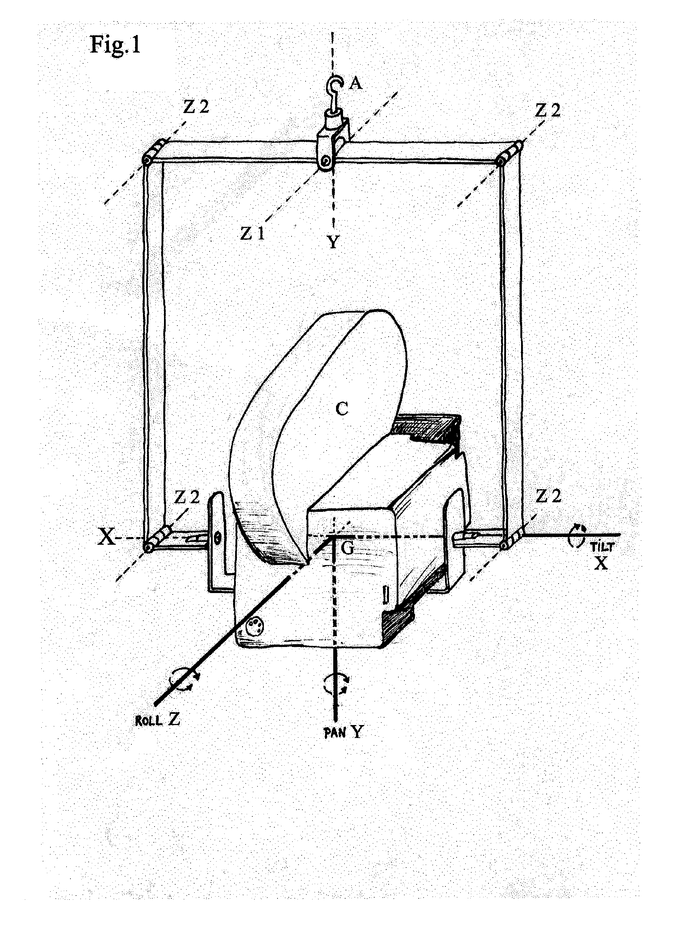

Illustrations données en tant qu'exemples non limitatifs pour expliquer le principe de fonctionnement :
Fig. 1
   La structure est formée d'un parallélogramme dont les angles sont articulés suivant quatre axes parallèles (Z 2). Au milieu du coté supérieur, un cinquième axe parallèle (Z 1), et dans le même plan que les deux articulations supérieures latérales, permet d'accrocher un anneau (A), pivotant à son tour autour d'un axe (Y) perpendiculaire au coté supérieur du parallélogramme, et également perpendiculaire aux cinq axes précités. Le coté inférieur du parallélogramme est rompu ; une plaque réglable en hauteur pivote autour d'un axe (X) parallèle au coté inférieur, qui coupe les deux axes des articulations latérales inférieures de manière perpendiculaire. La caméra (C) vient se poser sur cette plaque, de manière réglable afin que son centre de gravité puisse se confondre avec le croisement des axes TILT (X), PAN (Y) et ROLL (Z).
Fig. 2
   Le principe de fonctionnement est le même que pour la structure en Fig.1, mais la caméra (C) est placée à l'extérieur du parallélogramme. La structure se compose d'un parallélogramme, dont les angles sont articulés suivant quatre axes parallèles (Z 2). Le coté supérieur se prolonge au-delà de l'articulation ; au bout de ce déport, un cinquième axe parallèle (Z 1), situé dans le même plan que les deux articulations supérieures latérales, permet d'accrocher un anneau (A), pivotant à son tour autour d'un axe (Y) perpendiculaire au coté supérieur du parallélogramme, et également perpendiculaire aux cinq axes précités. Le coté inférieur du parallélogramme est également prolongé au-delà de l'articulation, formant ainsi un déport correspondant en longueur et direction au coté supérieur prolongé ; il se termine en une plaque réglable en hauteur, pivotante autour d'un axe (X) parallèle au coté inférieur, qui coupe les deux axes des articulations latérales inférieures de manière perpendiculaire. La caméra (C) vient se poser sur cette plaque, de manière réglable afin que son centre de gravité puisse se confondre avec le croisement des axes TILT (X), PAN (Y) et ROLL (Z).

### Description détaillée

La description détaillée qui va suivre, ainsi que les dessins annexés, représentent à titre d'exemples non limitatifs un mode de réalisation de l'invention. Les dessins annexés illustrent l'invention :

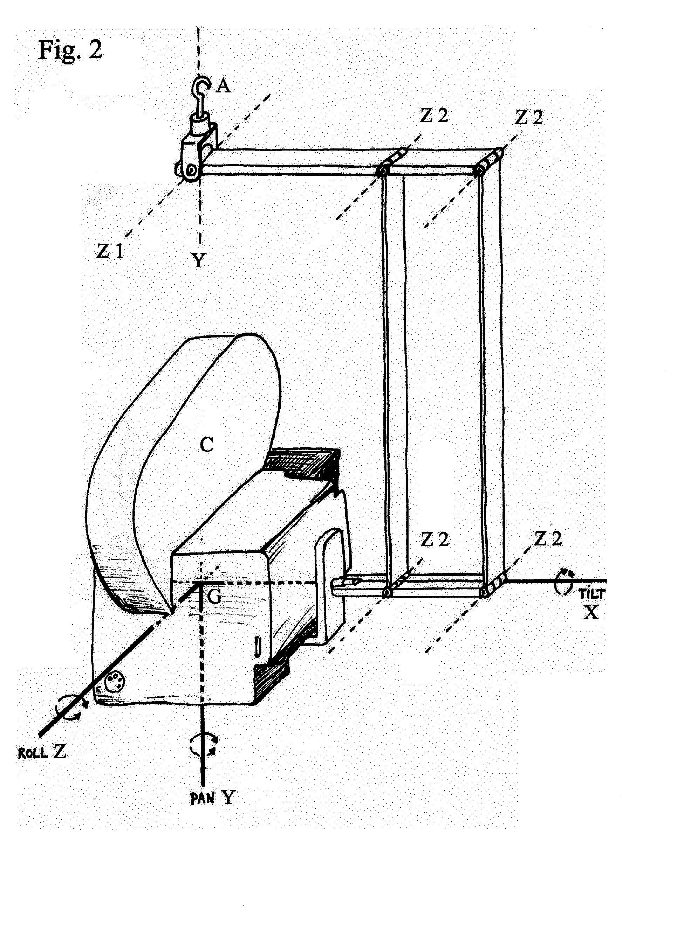

- Les figures 1 et 2 représentent 2 variantes du principe de fonctionnement

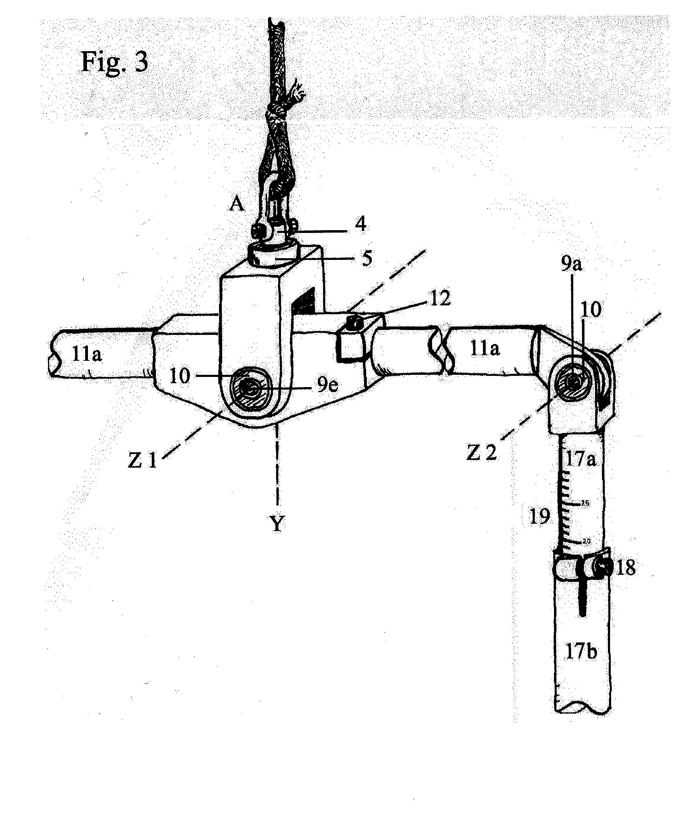

- La figure 3 représente une partie de la partie supérieure d'une réalisation possible du dispositif.

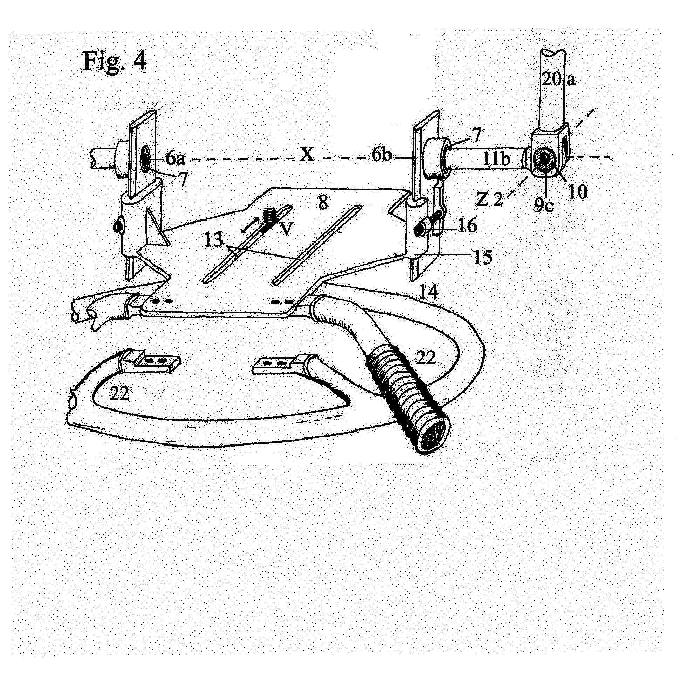

- La figure 4 représente une partie de la partie inférieure d'une réalisation possible du dispositif.

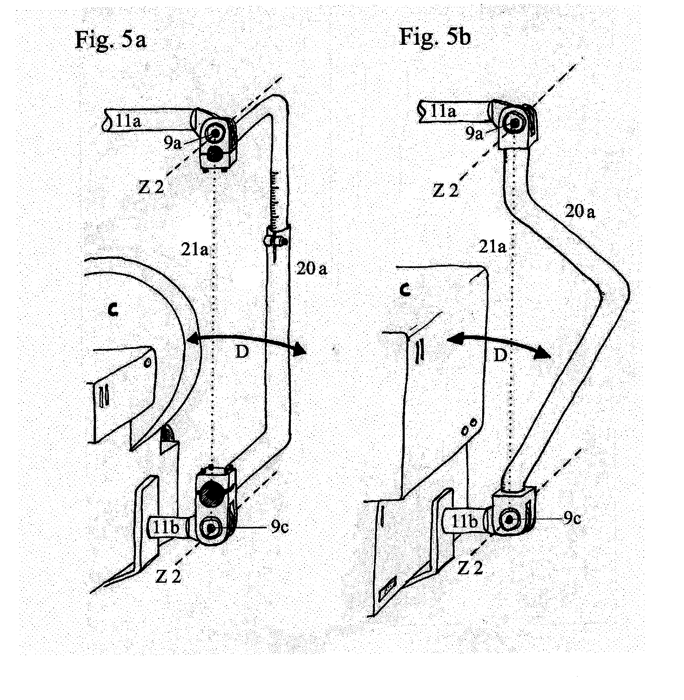

- Les figures 5a et 5b représentent des variantes possibles des cotés latéraux d'une réalisation possible du dispositif.

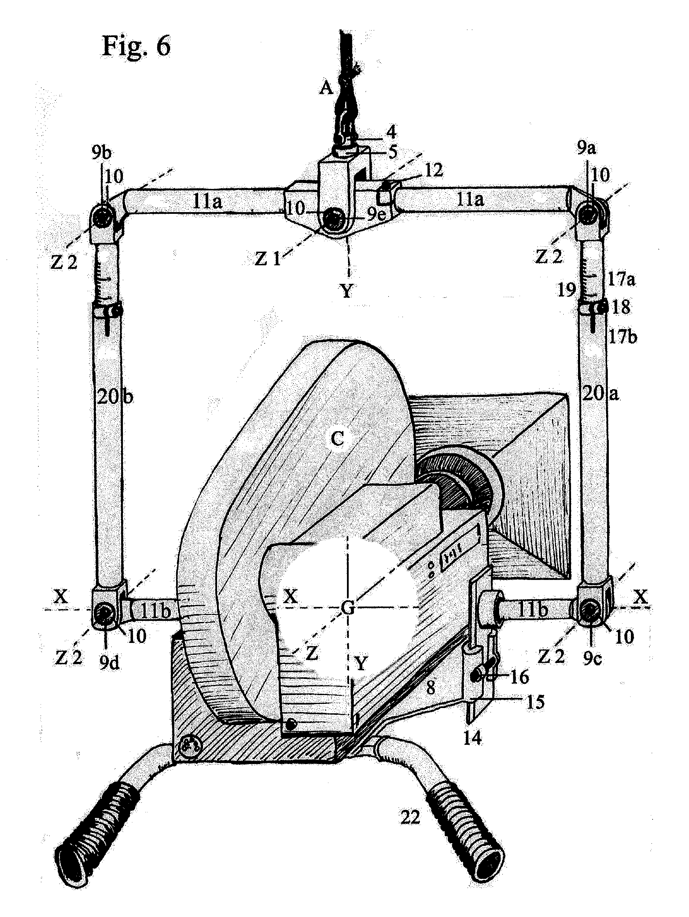

- La figure 6 représente l'ensemble d'une réalisation possible du dispositif.

Le bon fonctionnement du montage est essentiellement lié à deux paramètres :
- Le croisement des trois axes autour desquels s'exercent les mouvements en un seul et unique point. Voir A)
- Le rapprochement ou la superposition de ce point avec le centre de gravité de l'ensemble formé par : le support basculant, l'appareil fixé sur celui-ci, et, le cas échéant, les gyroscopes inertiels fixés sur l'appareil ou le support. Voir B)

### A)

Le mouvement de pan (Y) se fait sur un seul arbre vertical (4) , tournant de préférence dans des roulements à billes (5). Cet arbre est situé en dessous de l'anneau d'accroche (A), dans son prolongement vers le bas. Cet arbre (4) forme ainsi l'axe du PAN (Y), c'est à dire l'axe autour duquel pivote à gauche ou à droite l'ensemble du montage, incluant l'appareil (C) fixé sur le support basculant (8).

Le mouvement de tilt (X) se fait sur deux bouts d'arbres horizontaux (6a et 6b) alignés, tournants de préférence dans des roulements à billes (7), suffisamment écartés pour permettre de placer entre eux le support basculant (8) en forme de berceau sur lequel doit se monter l'appareil. Les deux bouts d'arbres forment ainsi l'axe du TILT (X), c'est à dire l'axe autour duquel bascule en avant ou en arrière le support basculant (8) et l'appareil (C) y étant fixé.

Le mouvement de roll (Z) se fait à travers cinq arbres horizontaux (9a, 9b, 9c, 9d et 9e), tournants de préférence dans des roulements à billes (10). Quatre de ces arbres (9a,9b,9c et 9d) sont situés aux quatre coins du parallélogramme, de manière perpendiculaire au plan formé par celui-ci, le rendant entièrement articulé. Un cinquième (9 e) est placé sur le coté supérieur du parallélogramme (1 la), en dessous de l'anneau d'accroche (A), en coupant l'axe de pan (Y) de manière perpendiculaire, et parallèle aux quatre autres arbres (9a,9b,9c et 9d). L'anneau d'accroche (A) avec ses deux arbres (4 et 9 e) croisés doit être monté sur le coté supérieur du parallélogramme ou son prolongement, de manière à placer l'arbre horizontal (9 e) dans le même plan que les deux arbres (9a et 9b) aux deux coins supérieurs du parallélogramme. L'ensemble des cinq arbres forme ainsi l'axe du ROLL (Z), c'est à dire l'axe autour duquel bascule à droite ou à gauche le coté inférieur du parallélogramme, incluant le support basculant (8) et l'appareil (C) y étant fixé.

Pour assurer le croisement des trois axes X, Y et Z en un seul point, le montage doit contenir en un seul plan les deux arbres (9c et 9d) des coins inférieurs du parallélogramme et les deux arbres (6a et 6b) formant l'axe du tilt.

### B)

Pour rapprocher ou superposer le point de croisement des trois axes et le centre de gravité (G) de l'ensemble appareil - support - (gyroscopes), la possibilité de réglages est indispensable.

La plaque du support basculant (8) peut-être équipée d'une fixation (V) pour l'appareil (C) qui peut permettre de déplacer celui-ci, et donc le centre de gravité, en avant et en arrière, par le moyen d'une glissière avec un blocage ou de trous de fixation oblongs (13) par exemple.

Les fixations latérales (14) du support basculant (8) sur les arbres (6a et 6b) formant l'axe du tilt (X) peuvent être réalisées avec une possibilité de réglage en hauteur, grâce à deux glissières (15) avec blocages (16) ou à deux vis sans fin, par exemple. On obtient ainsi une forme de berceau, dont le fond peut se lever ou s'abaisser par rapport aux parois, et déplacer ainsi le centre de gravité (G) de haut en bas.

Ces deux réglages permettent de positionner le centre de gravité (G) de manière à ce qu'il soit traversé par l'axe du tilt (X).

L'anneau d'accroche (A) avec ses deux axes croisés (4 et 9 e) peut être monté de manière à pouvoir être déplacé le long du coté supérieur du parallélogramme ou de son prolongement, en coulissant sur un ou plusieurs tubes (11a) formant ce coté, par exemple, avec une possibilité de blocage (12). Ce réglage permet de déplacer le centre de gravité (G) à gauche ou à droite, pour le positionner de manière à ce qu'il soit traversé par l'axe du roll (Z).

Pour adapter ce montage aux différents appareils, il est utile de pouvoir régler la taille du parallélogramme, par exemple en construisant chacun des cotés (11a, 11b, 20a et 20b) de celui-ci avec deux tubes de diamètres différents (17a et 17b), pouvant coulisser l'un dans l'autre, avec un serrage (18) et une graduation (19) afin d'effectuer le réglage correspondant sur le coté parallèle.

Afin qu'un opérateur puisse facilement orienter l'appareil, le support basculant (8) peut-être équipé de une ou plusieurs poignées (22) de formes différentes, selon le besoin.

Pour augmenter le débattement (D) possible en ROLL (Z), et selon la forme de l'appareil (C), les cotés latéraux (20a et 20b) du parallélogramme peuvent être cintrés ou déformés, tout en gardant parallèle et de la même longueur les lignes imaginaires 21a reliant le point 9a au point 9c et 21b reliant le point 9b au point 9d.

## Revendications

1. Montage articulé pour article **caractérisé en ce qu'**il comprend un point d'accroche (A) pour être suspendu, un élément de support basculant (8) auquel peut-être fixé ledit article (C), et une timonerie (11a, 11b, 20a et 20b) en forme de parallélogramme articulé en ses coins (9a, 9b, 9c et 9d), reliant ledit élément de support au point d'accroche, l'ensemble étant conçu pour que tous les mouvements de pivot possibles dudit article se fassent autour d'axes (X, Y et Z) se croisant en un seul point pouvant être confondu avec le centre de gravité (G) de l'ensemble formé par ledit article (C) et ledit support basculant (8).

2. Montage articulé selon la revendication 1, **caractérisé en ce que** ledit support basculant (8) est situé à l'intérieur du parallélogramme formé par la timonerie.

3. Montage articulé selon la revendication 1, **caractérisé en ce que** ledit support basculant (8) est situé à l'extérieur, à coté du parallélogramme formé par la timonerie.

4. Montage articulé selon l'une quelconque des revendications précédentes, **caractérisé en ce que** ledit support basculant (8) est réglable en hauteur grâce à une ou plusieurs glissières latérales (15).

5. Montage articulé selon l'une quelconque des revendications précédentes, **caractérisé en ce que** ledit support basculant (8) comprend un dispositif (13) permettant le réglage de l'emplacement dudit article (C).

6. Montage articulé selon l'une quelconque des revendications précédentes, **caractérisé en ce que** ledit support basculant (8)comprend un organe de verrouillage (V) pour fixer ledit article (C) en position correcte.

7. Montage articulé selon l'une quelconque des revendications précédentes, **caractérisé en ce que** ledit support basculant (8) comprend une ou plusieurs poignées (22) pour être manipulé par un opérateur.

8. Montage articulé selon l'une quelconque des revendications précédentes, **caractérisé en ce que** ledit point d'accroche (A) comporte un arbre (4) vertical permettant à l'ensemble de pivoter autour de cet axe (Y).

9. Montage articulé selon l'une quelconque des revendications précédentes, **caractérisé en ce que** ledit point d'accroche (A) comporte un arbre horizontal (9 e) perpendiculaire à l'axe (X) dudit support basculant.

10. Montage articulé selon la revendication 9 précédente, **caractérisé en ce que** ledit arbre horizontal (9 e) se trouve dans le même plan que les deux arbres d'articulation (9a et 9b) des coins supérieurs dudit parallélogramme.

11. Montage articulé selon l'une quelconque des revendications précédentes, **caractérisé en ce que** ledit point d'accroche (A) est disposé de façon réglable le long du coté supérieur (11a), ou de son prolongement, dudit parallélogramme.

12. Montage articulé selon l'une quelconque des revendications précédentes, **caractérisé en ce que** ledit parallélogramme comporte des cotés (11a, 11b, 20a et 20b) réglables en longueur.

13. Montage articulé selon l'une quelconque des revendications précédentes, **caractérisé en ce que** ledit parallélogramme comporte des cotés latéraux (20a et 20b) courbés, cintrés ou déformés.

14. Montage articulé selon l'une quelconque des revendications précédentes, **caractérisé en ce qu'**il comprend un ou plusieurs stabilisateurs inertiels, gyroscopiques par exemple, ou que ce ou ces stabilisateurs viennent s'ajouter à ledit article (C).

15. Montage articulé selon l'une quelconque des revendications précédentes, **caractérisé en ce que** ledit article (C) est un appareil de prises de vues.
